# EUROPÄISCHE PATENTANMELDUNG

(11) **EP 1 862 064 A2**
(43) Veröffentlichungstag der Anmeldung: **05.12.2007**
(21) Anmeldenummer: 07010656.2
(22) Anmeldetag: 30.05.2007
(51) Int. Cl.: A01G 29/00

(54) **Baumscheibe**

(30) Priorität: 02.06.2006 DE 202006008883 U; 10.07.2006 DE 202006010713 U
(71) Anmelder: KRONIMUS AG, 76473 Iffezheim (DE)
(72) Erfinder: Schwarz, Michael, 69114 Heidelberg (DE)
(74) Vertreter: Otten, Herbert

(57) **Zusammenfassung**

Die Erfindung betrifft eine Baumscheibe (1) umfassend eine ein- oder mehrteilige Scheibe (2) mit einer Durchtrittsöffnung (5) für einen Stamm eines Baumes, wobei die Scheibe (2) wenigstens zwei Durchgangslöcher (3a, 3b, 4a, 4b) aufweist. Hierbei stehen jeweils zwei Durchgangslöcher (3a, 3b; 4a, 4b) durch eine Rohrleitung (3, 4) miteinander in Verbindung, wobei die Rohrleitung (3, 4) zwischen den Durchgangslöchern (3a, 3b; 4a, 4b) U-förmig in einer senkrechten Ebene (El, E2) verläuft.

## Beschreibung

Die Erfindung betrifft eine Baumscheibe gemäß dem Oberbegriff des Anspruchs 1.

Aus der DE 84 20 431 U1 ist eine mehrteilige Baumscheibe bekannt, welche Löcher oder Bohrungen zum Durchtritt von Befeuchtungswasser aufweist. Eine effektive Bewässerung ist mit einer derartigen Baumscheibe nicht möglich, da sich das Erdreich unter den Löchern verdichtet und somit die Versickerungsleistung im Bereich der Löcher minimal ist. Weiterhin ist aus der EP 0 194 963 A1 eine Belüftungs- und Bewässerungsvorrichtung für Bäume bekannt. Diese besteht aus um die Wurzel eines Baumes angeordneten Filterkästen, welche über eine Ringleitung miteinander verbunden sind und von denen jeweils Rohre zu der Wurzel des Baumes verlaufen. Nachteilig an einer derartigen Vorrichtung ist, dass die zu der Wurzel führenden Rohre auch bei größter Sorgfalt beim Austausch von Filtern und Sieben sich mit den Jahren verstopfen und dann die geplante Bewässerung und/oder Belüftung nicht mehr optimal erfolgen kann.

Der Erfindung liegt die Aufgabe zugrunde, eine Baumscheibe mit einer Belüftungs- und Bewässerungsvorrichtung für Bäume zu entwickeln, welche über einen langen Zeitraum eine nahezu gleichbleibend gute Bewässerung und/oder Belüftung eines Wurzelbereichs eines Baumes erlaubt.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Die erfindungsgemäße Baumscheibe weist wenigstens zwei Durchgangslöcher auf, wobei jeweils zwei Durchgangslöcher durch eine Rohrleitung miteinander in Verbindung stehen und wobei die Rohrleitung in einer senkrechten Ebene einen U-förmigen Verlauf aufweist. Hierdurch ist es möglich, mit der Rohrleitung den Wurzelbereich zu erreichen und die Rohrleitung bei einer Verstopfung mit Druckluft zu durchblasen oder mit Wasser zu durchspülen und somit die volle Funktionsfähigkeit wieder herzustellen. Kern der Erfindung ist somit eine Baumscheibe mit integriertem Belüftungs- und/oder Bewässerungssystem, welches durch das Vorhandensein von zwei Öffnungen mit minimalem Aufwand und technische einfachen Mitteln gereinigt werden kann und gleichzeitig in optimalem Kontakt zu dem Wurzelbereich steht.

Die Erfindung sieht auch vor, die Rohrleitung in Ihrer Wand mit Öffnungen zu versehen, durch welche aus der Rohrleitung Flüssigkeit und/oder Luft an Erdreich übertragbar sind, in welchem die Rohrleitung verlegt ist. Hierdurch ist eine Abgabe von Flüssigkeit und/oder Luft mit einfachsten Mitteln möglich.

Weiterhin sieht die Erfindung vor, die Rohrleitung wenigstens abschnittsweise aus einer Membran zu bilden, durch welche Flüssigkeit und/oder Luft an das Erdreich übertragbar sind. Hierdurch ist eine großflächige und gleichzeitig dosierte Übertragung möglich, die abhängig von der Lage der Membran in bestimmten Bereichen erfolgen kann.

Die Erfindung sieht vor, in dem Durchgangsloch der Scheibe einen Stutzen anzuordnen. Hierdurch kann die Scheibe zunächst als besonders einfaches Bauteil ausgebildet werden.

Weiterhin sieht die Erfindung eine Anschließbarkeit der Rohrleitung an den Stutzen vor. Hierdurch ist eine Montage vor Ort möglich.

Die Erfindung sieht auch eine Verriegelbarkeit des Stutzens an der Scheibe vor. Hierdurch ist eine einfache und rasche Montage des Stutzens an der Scheibe möglich.

Weiterhin sieht die Erfindung vor, den Stutzen mit einem Sieb und/oder einem Filter zu versehen, um das Eindringen von Verschmutzungen in die Rohrleitung zu verhindern.

Erfindungsgemäß ist es auch vorgesehen, mit der Rohrleitung zwei gegenüberliegende Durchgangslöcher zu verbinden. Hierdurch ist auch eine Versorgung einer Wurzelunterseite des Baumes möglich.

Weiterhin ist es vorgesehen, die Scheibe aus Stahlbeton und/oder Holz und/oder Kunststoff und/oder Metall, insbesondere Gusseisen herzustellen. Derartige Werkstoffe stehen kostengünstig zur Verfügung.

Die Erfindung sieht auch vor, den Stutzen einteilig mit der Scheibe auszubilden. Ein in eine Scheibe aus Stahlbeton ' eingegossener Stutzen ist diebstahlsicher mit dieser verbunden.

Schließlich sieht die Erfindung vor, die Rohrleitung dreiteilig auszubilden, wobei sich die Rohrleitung aus zwei Endstücken und einem Mittelstück zusammensetzt, wobei das Mittelstück insbesondere auf freie Enden der Endstücke aufsteckbar ist und die Endstücke mit den Stutzen verbunden sind. Hierdurch wird die Montage der Baumscheibe vereinfacht, da zunächst das Mittelstück der Rohrleitung in den Boden eingebracht werden kann und anschließend die Scheibe über die Endstücke einfach auf das Mittelstück aufgesteckt werden kann. Durch eine Überlappung zwischen Endstück und Mittelstück von bis zu 50 cm lassen sich Toleranzen einfach ausgleichen.

Weitere Einzelheiten der Erfindung werden in der Zeichnung anhand von schematisch dargestellten Ausführungsbeispielen beschrieben.

Hierbei zeigt:
Figur 1: eine perspektivische Ansicht einer erfindungsgemäßen Baumscheibe,
Figur 2: ein Detail einer weiteren erfindungsgemäßen Baumscheibe und
Figur 3: eine schematische Darstellung einer dritten erfindungsgemäßen Baumscheibe mit einer dreiteiligen Rohrleitung.

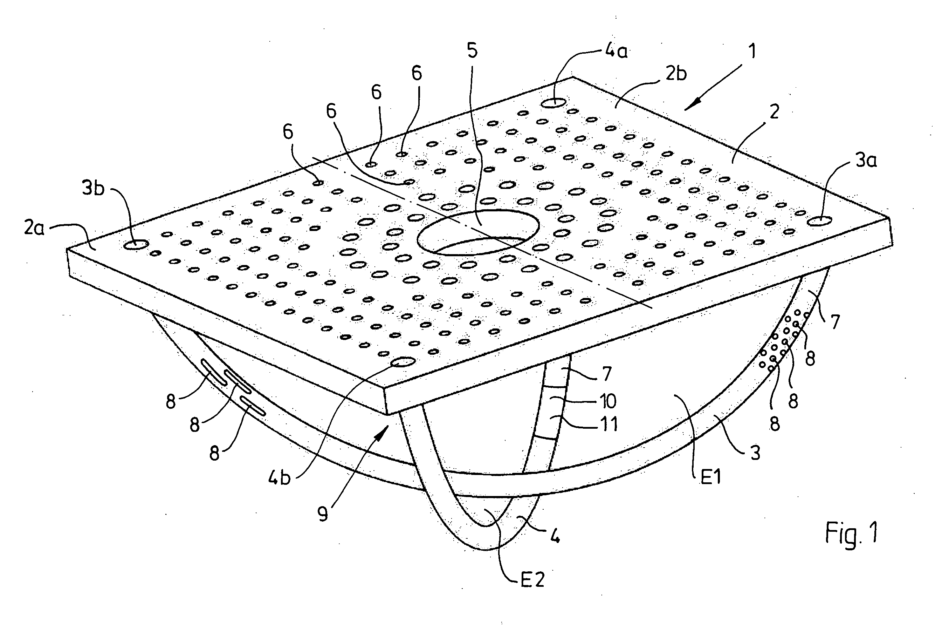

In der Figur 1 ist eine Baumscheibe 1 in einer perspektivischen Ansicht dargestellt. Die Baumscheibe 1 umfasst eine einteilige Scheibe 2 und zwei Rohrleitungen 3 und 4, welche jeweils zwei gegenüberliegende Durchgangslöcher 3a, 3b bzw. 4a, 4b miteinander verbinden. Die Rohrleitungen 2 und 3 verlaufen U-förmig in Ebenen E1 und E2, welche senkrecht zu der Scheibe 2 stehen. Neben den Durchgangslöchern 3a, 3b, 4a und 4b weist die Scheibe noch eine Durchtrittsöffnung 5 für einen Stamm eines nicht dargestellten Baumes auf. Weiterhin besitzt die Scheibe um die Durchtrittsöffnung 5 herum noch Sickerlöcher 6, durch welche Regenwasser in unter der Scheibe 2 liegendes, nicht dargestelltes Erdreich versickern kann. Wände 7 der Rohrleitungen 3 bzw. 4 weisen zahlreiche Öffnungen 8 auf, durch welche ein Wurzelbereich 9 des nicht dargestellten Baumes mit Luft und/oder Wasser versorgbar ist. Erfindungsgemäß ist es auch vorgesehen, einen Abschnitt 10 der Rohrleitung 4 aus einer Membran 11 zu bilden, welche flüssigkeitsdurchlässig und/oder luftdurchlässig ist. Gemäß einer nicht dargestellten Ausführungsvariante ist es auch vorgesehen die gesamte Rohrleitung aus der wasser- und/oder luftdurchlässigen Membran auszubilden. Der U-förmige Verlauf der Rohrleitungen 2, 3 in den senkrecht zu der Scheibe 2 stehenden Ebenen E1 und E2 ermöglicht eine Verbindung der Durchgangslöcher 3a, 3b bzw. 4a, 4b und hierbei ein gleichzeitiges Erreichen des Wurzelbereichs durch die Rohrleitungen 2 und 3. Mit einer gestrichelten Linie ist weiterhin eine mögliche Zweiteiligkeit der Scheibe 2 angedeutet. Die dann aus zwei Teilscheiben 2a und 2b bestehende Scheibe 2 kann auch um dicke Baumstämme gelegt werden.

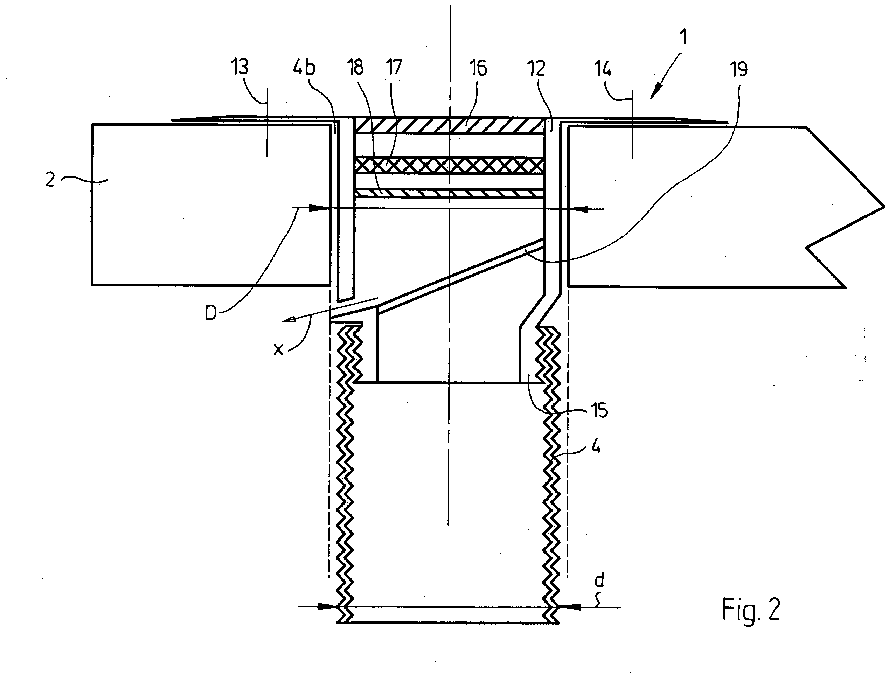

Die Figur 2 zeigt ein Detail einer weiteren Baumscheibe 1 in schematischer Darstellung. In der Detailansicht ist eine Scheibe 2 im Bereich eines Durchgangslochs 4b zu sehen. In das Durchgangsloch 4b ist ein Stutzen 12 eingesteckt und von oben mit Befestigungsmitteln 13 und 14 mit der Scheibe 2 verschraubt. Eine Rohrleitung 4, welche beispielsweise als Kunststoffrohr DN 100 ausgeführt ist, ist auf einen Hals 15 des Stutzens 12 aufgesteckt. Der Stutzen 12 umfasst ein Gitter 16, ein Sieb 17 und einen Filter 18. Das Gitter 16, das Sieb 17 und der Filter 18 sind herausnehmbar, um ein Durchblasen oder Durchspülen der Rohrleitung 4 zu ermöglichen. Gemäß einer Ausführungsvariante ist es vorgesehen einen schrägen Boden 19 in den Stutzen 12 einzulegen, durch welchen eintretendes Wasser in Pfeilrichtungxseitlich abgeleitet wird. Hierdurch ist eine reine Belüftungsfunktion der Rohrleitung 4 sicher gestellt. Der Boden 19 ist beispielsweise als engmaschiges Netz ausgeführt, welches luftdurchlässig ist. Erfindungsgemäß ist es auch vorgesehen eine Baumscheibe mit Rohrleitungen mit reiner Belüftungsfunktion und mit Rohrleitungen mit kombinierter'Belüftungs- und Bewässerungsfunktion auszustatten. Das in der Figur 2 gezeigte Durchgangsloch 4b weist einen Durchmesser D auf, welcher größer ist als ein Durchmesser d der Rohrleitung 4. Somit können bei der Montage der Baumscheibe zunächst Rohrleitungen mit leichter Überlänge im Erdreich verlegt werden, welche dann beim Aufsetzen der Scheibe durch die Durchgangslöcher gezogen werden. Die Rohrleitungen werden anschließend ggf. leicht gekürzt und mit den Stutzen verbunden. Abschließend werden die Stutzen in die Durchgangslöcher eingeschoben und mit der Scheibe verschraubt.

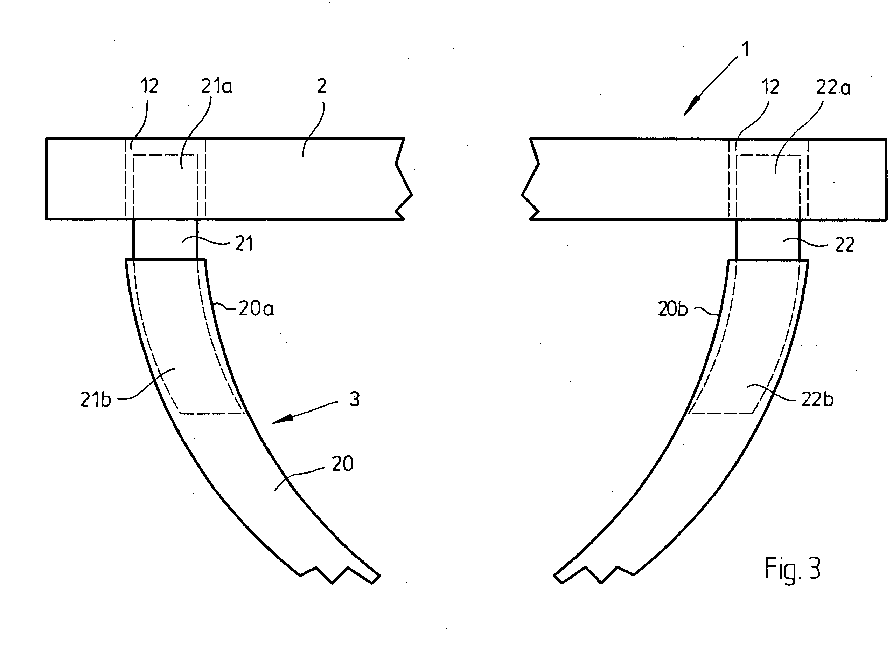

Die Figur 3 zeigt eine schematische Darstellung einer dritten erfindungsgemäßen Baumscheibe 1 mit einer dreiteiligen Rohrleitung 3. Die Rohrleitung 3 besteht aus einem Mittelstück 20 mit Enden 20a und 20b, einem linken Endstück 21 mit Enden 21a und 21b und einem rechten Endstück 22 mit Enden 22a und 22b. Die Endstücke 21 und 22 sind jeweils in Stutzen 12 einer Scheibe 2 befestigt. Gemäß einer nicht dargestellten Ausführungsvariante weisen die Stutzen 12 konische Öffnungen auf, in welche die Endstücke 21, 22 mit ihren Enden 21a bzw. 22a eingedrückt werden können. Die Verbindung der Endstücke 21 und 22 mit dem Mittelstück 20 erfolgt durch ein Einschieben der Enden 21b bzw. 22b der Endstücke 21 bzw. 22 in die Enden 20a bzw. 20b des Mittelstücks 20.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung auch eine Reinigung der Rohrleitungen mit einer Spindel vor.

### Bezugszeichenliste:

- 1: Baumscheibe
- 2: Scheibe
- 2a, 2b: Teilscheibe
- 3: Rohrleitung
- 3a, 3b: Durchgangsloch in 2
- 4: Rohrleitung
- 4a, 4b: Durchgangsloch in 2
- 5: Durchtrittsöffnung in 2
- 6: Sickerloch in 2
- 7: Wand von 3 bzw. 4
- 8: Öffnung in 7
- 9: Wurzelbereich
- 10: Abschnitt von 4
- 11: Membran
- 12: Stutzen
- 13, 14: Befestigungsmittel
- 15: Hals von 12
- 16: Gitter
- 17: Sieb
- 18: Filter
- 19: Boden
- 20: Mittelstück
- 20a, 20b: Ende von 20
- 21: Endstück
- 21a, 21b: Ende von 21
- 22: Endstück
- 22a, 22b: Ende von 22

- D: Durchmesser von 4b
- d: Durchmesser von 3 bzw. 4
- E1, E2: senkrechte Ebene definiert durch 2 bzw. 3

## Patentansprüche

1. Baumscheibe (1) umfassend eine ein- oder mehrteilige Scheibe (2) mit einer Durchtrittsöffnung (5) für einen Stamm eines Baumes, wobei die Scheibe (2) wenigstens zwei Durchgangslöcher (3a, 3b, 4a, 4b) aufweist, **dadurch gekennzeichnet, dass** jeweils zwei Durchgangslöcher (3a, 3b; 4a, 4b) durch eine Rohrleitung (3, 4) miteinander in Verbindung stehen, wobei die Rohrleitung (3, 4) zwischen den Durchgangslöchern (3a, 3b; 4a, 4b) U-förmig in einer senkrechten Ebene (E1, E2) verläuft.

2. Baumscheibe nach Anspruch 1, **dadurch gekennzeichnet, dass** die Rohrleitung (3, 4) in Ihrer Wand (7) Öffnungen (8) aufweist, durch welche aus der Rohrleitung (3, 4) Flüssigkeit und/oder Luft an Erdreich übertragbar sind.

3. Baumscheibe nach Anspruch 1, **dadurch gekennzeichnet, dass** die Rohrleitung (3, 4) wenigstens abschnittsweise aus einer Membran (11) gebildet ist durch welche Flüssigkeit und/oder Luft an das Erdreich übertragbar sind.

4. Baumscheibe nach einem der vorhergehenden Ansprüche, **dadurch gekennzeichnet, dass** in dem Durchgangsloch (3a, 3b, 4a, 4b) ein Stutzen (12) angeordnet ist.

5. Baumscheibe nach einem der vorhergehenden Ansprüche, **dadurch gekennzeichnet, dass** die Rohrleitung (3, 4) an den Stutzen (12) anschließbar ist.

6. Baumscheibe nach einem der vorhergehenden Ansprüche, **dadurch gekennzeichnet, dass** Stutzen (12) an der Scheibe (2) verriegelbar ist.

7. Baumscheibe nach einem der vorhergehenden Ansprüche, **dadurch gekennzeichnet, dass** der Stutzen (12) ein Sieb (17) und/oder einen Filter (18) umfasst.

8. Baumscheibe nach einem der vorhergehenden Ansprüche, **dadurch gekennzeichnet, dass** die Rohrleitung (3, 4) gegenüberliegende Durchgangslöcher (3a, 3b, 4a, 4b) verbindet.

9. Baumscheibe nach einem der vorhergehenden Ansprüche, **dadurch gekennzeichnet, dass** die Scheibe (2) aus Stahlbeton und/oder Holz und/oder Kunststoff und/oder Metall, insbesondere Gusseisen hergestellt ist.

10. Baumscheibe nach einem der vorhergehenden Ansprüche, **dadurch gekennzeichnet, dass** der Stutzen (12) einteilig mit der Scheibe (2) ausgebildet ist.

11. Baumscheibe nach einem der vorhergehenden Ansprüche, **dadurch gekennzeichnet, dass** die Rohrleitung (3, 4) aus zwei Endstücken (21, 22) und einem Mittelstück (20) zusammengesetzt ist.

12. Baumscheibe nach einem der vorhergehenden Ansprüche, **dadurch gekennzeichnet, dass** das Mittelstück (20) auf freie Enden (21b, 22b) der Endstücke (21, 22) aufsteckbar ist und die Endstücke (21, 22) mit den Stutzen (12) der Platte (2) verbunden sind.
